# EUROPÄISCHE PATENTSCHRIFT

(11) **EP 4 115 966 B1**
(45) Veröffentlichungstag und Bekanntmachung des Hinweises auf die Patenterteilung: **29.01.2025**
(21) Anmeldenummer: 22181735.6
(22) Anmeldetag: 29.06.2022
(51) Int. Cl.: B01D 29/64, B01D 46/681, A47L 15/00, D06F 39/00, D06F 58/00

(54) **FILTERSYSTEM UND VERFAHREN ZUM REINIGEN EINER FILTERFLÄCHE**
FILTER SYSTEM AND METHOD FOR CLEANING A FILTER SURFACE
SYSTÈME DE FILTRE ET PROCÉDÉ DE NETTOYAGE D'UNE SURFACE DE FILTRE

(30) Priorität: 07.07.2021 DE 102021207119
(43) Veröffentlichungstag der Anmeldung: 11.01.2023
(73) Patentinhaber: BSH Hausgeräte GmbH, 81739 München (DE)
(72) Erfinder: Bischof, Andreas, 10407 Berlin (DE); Eglmeier, Hans, 10587 Berlin (DE)

(56) Entgegenhaltungen:
- EP-A1- 3 392 398
- WO-A1-2018/121872
- US-B2- 9 616 363

## Beschreibung

Die vorliegende Erfindung betrifft ein Filtersystem und ein Verfahren zum Reinigen einer Filterfläche eines Filtersystems.

Filtersysteme werden beispielsweise in Abpump- oder Umpumpsträngen von wasserführenden Hausgeräten verwendet und können sehr schnell mit den auszufilternden Partikeln verstopfen. Als eine wirksame Maßnahme dagegen hat sich ein mechanisches Abreinigen der Filterfläche herausgestellt (das sogenannte Abrakeln der Filterfläche). Dabei wird mit einem mechanischen Schaber (,Rakel') die Filterfläche turnusmäßig, kontinuierlich, oder nach Bedarf von ausgefilterten Partikeln freigeschabt. Technisch einfach sind zyklisch arbeitende Systeme, bei denen die Rakel auf einer in sich geschlossenen Bahn bewegt wird, etwa eine achsparallele Rakelkante in Umfangsrichtung im Inneren einer zylindrischen Filterkartusche, oder eine radiale Rakelkante in einer kreisförmigen Bewegung auf einem ebenen Filter.

Die WO 2019081013 A1 zeigt eine Waschmaschine mit einer Trommel, einem Sumpf unterhalb der Trommel, einem Wasserkreislauf mit einer ausziehbaren Schublade zum Einbringen von Waschmittel oder Zusätzen, wobei der Wasserkreislauf in Fluidverbindung mit einer Detektionseinrichtung zum Detektieren von Mikrofasern oder Verunreinigungen im Wasser steht, und einer Zirkulationspumpe und Leitungen zum Zirkulieren von Wasser. Ferner ist ein Verfahren zum Betrieb gezeigt, das ein Abzweigen einer im Kreislauf zirkulierenden Wassermenge und einen Transports zu den Detektionsmitteln zur Analyse und ein Analysieren des Wassers in den Detektionsmitteln umfasst. Abhängig vom Ergebnis dieser Analyse wird ein Filterprozess mit Filtriermitteln zum Herausfiltern der Mikrofasern aus dem Wasser aktiviert. Die herausgefilterten Mikrofasern können gesammelt und anschließend einfach aus der Waschmaschine entnommen werden.

Die DE 11 2006 001 349 T5 zeigt eine Vorrichtung zum automatischen Entfernen von Flusen in einer Durchlaufwaschmaschine. Die Vorrichtung weist eine Öffnung, die in einem Waschflüssigkeits-Zuführrohr ausgebildet ist, und ein Führungsflügel, der entlang der Öffnung am Zuführrohr befestigt ist, auf. Ein zylindrischer Schirm ist drehbar um das Zuführrohr auf das Zuführrohr aufgesetzt und wird durch rotierende Antriebsrollen und drehend angetrieben. Eine aus der Öffnung fließende Waschflüssigkeit wird durch die Seitenwand des zylindrischen Siebes geleitet, gefiltert, um die Flusen von der Waschflüssigkeit zu trennen, und von einem Sammelrohr in die Durchlaufwaschmaschine zurückgeführt. Wenn das zylindrische Sieb gedreht wird, werden die an der inneren Umfangsfläche seiner Seitenwand abgelagerten Flusen durch einen Flüssigkeitsstrom, der durch den Leitflügel dorthin geleitet wird, abgeschält, aufgrund eines Unterschieds im spezifischen Gewicht abgesenkt, zu einem Flusenauslass geleitet und automatisch nach außen abgeleitet.

Die WO 2018/121872 A1 betrifft einen Wäschetrockner mit einem Filterelement zum Filtern eines Luftstroms während eines Trocknungsvorgangs, wobei das Filterelement einen Wischer aufweist, um die Filterfläche manuell zu reinigen.

Aus der EP 3 392 398 A1 ist ein Wäschetrockner oder ein Waschtrockner bekannt, welcher ein Reinigungssystem aufweist, welches dazu ausgestaltet ist, Wandung eines Filters mittels Bürsten und/oder eines Schabers abzureinigen.

Die Idee mit einer rotierenden Rakel die dadurch abgeschabten Partikel mit einer zur Bewegungsrichtung schrägstehenden Rakelkante (z.B. schraubenförmige Gestaltung der Rakel im Zylinder bzw. Planspirale bei ebenem Filter) in eine Richtung orthogonal zur Bewegungsrichtung in ein Depot zu schieben (bei der Zylinderkartusche etwa auf einer Seite des Zylinders, beim Planfilter etwa radial außen) und dort zu sammeln, funktioniert nur bedingt, da der für diese Schubbewegung erforderliche orthogonale Anteil des Kraftvektors faktisch nicht auftritt und somit die Partikelansammlungen von der Rakel nur in Bewegungsrichtung (z.B. einfach im Kreis herum) geschoben werden, ohne sich zusätzlich (in einem brauchbaren Maß) in axialer bzw. radialer Richtung zu bewegen. Dadurch kann eine Strecke, über die die Partikel über die Filterfläche geschoben werden erhöht sein, wodurch ein erhöhter Verschleiß der Filterfläche erfolgen kann.

Daher ist es eine Aufgabe der Erfindung ein Filtersystem und ein Verfahren zum Reinigen einer Filterfläche bereitzustellen, die eine Filterfläche zuverlässig von Partikeln befreien können und gleichzeitig eine erhöhte Lebensdauer des Filtersystems gewährleistet. Ferner ist es eine Aufgabe der vorliegenden Erfindung die Partikel einem dafür vorgesehenen Bereich in dem Filtersystem zuzuführen.

Diese Aufgabe wird mit einem Filtersystem mit den Merkmalen des Anspruchs 1 und mit einem Verfahren zum Reinigen einer Filterfläche mit den Merkmalen des Anspruchs 8 gelöst.

Gemäß einem Aspekt der vorliegenden Erfindung wird ein Filtersystem für ein wasserführendes Haushaltsgerät bereitgestellt, wobei das Filtersystem umfasst:
einen Filter mit einer Filterfläche zum Ausfiltern von Partikeln aus einem Fluid,
eine Rakel, die dazu ausgestaltet ist, die Filterfläche abzurakeln, und
einen Rakelantrieb, der dazu ausgestaltet ist, die Rakel so anzutreiben, dass sich die Rakel mit einer Translationsbewegung und einer Rotationsbewegung relativ zu der Filterfläche bewegt.

Im Gegensatz zum Stand der Technik kann die Rakel des Filtersystems der vorliegenden Erfindung eine Translationsbewegung und eine Rotationsbewegung ausführen. Somit kann zusätzliche eine axiale bzw. radiale aufgebracht werden, um damit die Partikel abzurakeln und in einem dafür vorgesehenen Bereich des Filtersystems (z.B. in einem Depot) zu sammeln und dort ggf. zu komprimieren. Dabei kann eine wenigstens abschnittsweise schraubenförmige Rakel (z.B. zylindrische Schraube bei Zylinder) in zwei Dimensionen bewegt werden: Zum einen mit einer Drehung (koaxial zum Zylinder), zum anderen mit einer Schubbewegung (axial beim Zylinder). Durch zyklisches Kombinieren der beiden Basisbewegungen können sich vorteilhafte Betriebsabläufe des Filtersystems ergeben.

Die Translationsbewegung (auch reine Translation, lineare Bewegung) kann eine Bewegung sein, bei der alle Punkte der Rakel, (die z. B. als ein starrer Körper ausgebildet ist) dieselbe Verschiebung erfahren (beispielsweise wie bei einer Parallelverschiebung in der Geometrie). Zu einem gegebenen Zeitpunkt können Geschwindigkeiten und Beschleunigungen aller Punkte identisch sein. Sie können sich auf parallelen Trajektorien bewegen. Davon zu unterscheiden ist die Rotationsbewegung, bei der sich alle Punkte der Rakel kreisförmig um eine gemeinsame Achse (Rotationsachse) bewegen.

Bei dem Filtersystem kann es sich um ein System handeln, das ein Fluid über einen Zulauf aufnehmen kann, mit dem Fluid transportierte Partikel aus dem Fluid ausfiltern kann und das Fluid über einen Auslass aus dem Filtersystem austragen kann. Das Fluid kann beispielsweise ein Gemisch aus Wasser, Partikeln und Wäschebehandlungsmittel sein. Ferner kann das Fluid auch ein Gas mit einer Partikelfracht sein. Das Fluid kann dem Filtersystem durch eine Fluidzufuhr zugeführt werden, um durch das Filtersystem von den Partikeln gereinigt zu werden und anschließend aus dem Fluidauslauf wieder aus dem Filtersystem auszutreten. Bei den Partikeln kann es sich um Wäschebehandlungsmittelrückstände, Mikroplastik, Wäschereste, Verunreinigungen und dergleichen handeln. Partikel können durch den Filter zurückgehalten werden, wohingegen das Fluid durch den Filter hindurchtreten kann. Genauer gesagt kann der Filter einen Primärbereich aufweisen, auf dem sich die Partikel ansammeln. Ein gegenüberliegender Sekundärbereich des Filters kann stromabwärts hinsichtlich der Fließrichtung des Fluids angeordnet sein. Die Rakel kann den Primärbereich des Filters (d.h. die Filterfläche) durch Kontakt mit der Filterfläche des Filters von den Partikeln befreien. Dazu kann die Rakel über die Filterfläche bewegt werden und dabei mit einer Rakelkante mit der Filterfläche in Kontakt, insbesondre in flächigem Kontakt, sein. Folglich kann die Rakel dazu ausgestaltet sein, die Filterfläche mechanisch abzustreifen. Die Rakelkante kann eine klingenartige Ausgestaltung aufweisen. Die Partikel können durch die Rakelkante von der Filterfläche abgehoben und in Bewegungsrichtung vor der Rakelkante angehäuft und mitgeschoben werden. dabei kann die Rakelkante eine von Partikeln befreite Schneise auf der Filterfläche hinterlassen. Die Rakel ist als eine Schraubenrakel mit einem oder mehreren Schraubengängen ausgestaltet.

Der Filter kann eine zylindrische Form aufweisen, bei der die Mantelfläche und/oder die Deckflächen als Filterfläche ausgestaltet sind. Innerhalb des Filters kann die Rakel so angeordnet sein, dass sie sich relativ zu dem Filter zu bewegen kann, so dass Partikel von der Filterfläche abgerakelt werden. Ferner kann der Filter aus einer Gazemembran oder Metallsieb oder dergleichen gebildet sein. Der Filter kann eine Porenweite in einem Bereich von 10 µm bis 100 µm. Somit kann der Filter an eine Vielzahl von Einsatzgebieten angepasst werden. Vorzugsweise weist der Filter eine Porenweite von 25 µm bis 50 µm auf. In diesem Bereich können zuverlässig Mikroplastikpartikel aus dem Fluid ausgefiltert werden und selbst strenge Umweltschutzbestimmungen erfüllt werden. Gleichzeitig kann aber ein ausreichender Volumenstrom durch das Filtersystem sichergestellt werden, um das Haushaltsgerät effizient betreiben zu können.

Bei einem zylindrischen Filter kann ein Verhältnis eines Durchmessers des Zylinders zu einer Höhe des Filters in einem Beriech 0,1 bis 0,6 liegen. In diesem Bereich kann eine besonders gute Reinigung der Filterfläche durch die Rakel erreicht werden, da dich sich dadurch ergebende Filterfläche selbst bei stark mit Partikeln belastetem Fluid zuverlässig gereinigt werden kann. Vorzugsweise liegt das Verhältnis in einem Bereich von 0,25 bis 0,4. In diesem Bereich wurde herausgefunden, dass ein Rakelantrieb sehr einfach ausgestaltet sein kann, um die Rakel über die Filterfläche zu bewegen. Somit kann in diesem Bereich ein Optimum aus aufgewendetem Material, gutem Volumendurchsatz und guter Filterleistung erreicht werden.

Demgemäß bietet das Filtersystem gemäß der vorliegenden Erfindung die Möglichkeit einen Filter zu rakeln, die abgerakelten Partikel in Richtung eines Depots zu schieben, und sie dort zu komprimieren. Die Partikel werden dabei aktiv in das Depot geschoben, so dass der filternde Bereich von Partikelansammlngen freigehalten wird. Ferner lässt sich das Filtersystem vor allem dort einsetzen, wo zum einen eine hohe Flächengeschwindigkeit beim Rakeln erforderlich ist (etwa für hohe Filterleistung bei großem Volumendurchsatz mit stark verschmutztem Wasser und kleiner Filterfläche; typisch für Hausgeräte, wie Waschmaschinen oder Spülmaschinen mit wenig Bauraum für einen Filter) und zum anderen der Volumenstrom während des Filterns und Rakeln nicht unterbrochen werden kann/sollte, wie z.B. im Abpumpstrang einer Waschmaschine. Ferner ist es vorteilhaft die abgerakelten Partikel aus einem Depot zu entnehmen bzw. mit einer Ausschleusevorrichtung aus dem Filtergehäuse auszuschleusen.

Vorzugsweise umfasst die Translationsbewegung eine Bewegung in eine erste Translationsbewegungsrichtung und in eine zweite entgegengesetzte Translationsbewegungsrichtung.

Mit anderen Worten kann sich die Rakel während der Translationsbewegung in zwei einander gesetzten Bewegungsrichtungen bewegen. Mit anderen Worten kann sich die Rakel oszillierenden in dem Filter hin und her bewegen. Somit ist gewährsleistet, dass Partikel, die zwischen der Rakelkante und der Filterfläche eingeklemmt sind nicht endlos über die Filterfläche geschoben werden, sondern bei einer Richtungsänderung am Ort der Richtungsänderung verbleiben. Somit ist die Haltbarkeit der Filterfläche erhöht. Die Translationsbewegung in einer Richtung kann sich über eine Ganghöhe der Schraubenrakel erstrecken. Mit anderen Worten kann sich die Rakel bei der Translationsbewegung in einer Richtung relativ zu der Filterfläche um eine Strecke verlagern, die der Höhe der Schraubenrakel entspricht. Die anschließende Rotationsbewegung kann sich ebenfalls über eine Ganghöhe und zusätzlich eine Umdrehung erstrecken. Somit kann die Schraubenrakel wieder in eine optimale Ausgangsposition gebracht werden, um erneut eine Translationsbewegung durchzuführen, um Partikel von der Filterfläche abzurakeln.

Vorzugsweise ist oder sind die Rakel und/oder der Rakelantrieb so ausgestaltet, dass nur während der Translationsbewegung in der ersten Translationsbewegungsrichtung Partikel von der Filterfläche abgerakelt werden.

Mit anderen Worten kann während dem Ausführen der Translationsbewegung in der zweiten Translationsbewegungsrichtung die Rakel geleichzeitig so rotiert (d. h. um eine Rotationsachse gedreht werden), dass sie trotz der Bewegung in der zweiten Translationsbewegungsrichtung keine Partikel von der Filterfläche abrakelt. Bei einer Schraubenrakel ist diese Bewegung vergleichbar mit einer Schraube, die aus einem Material herausgedreht wird. Dabei bewegt sich die Schraube auch translatorisch von dem Material weg und führt gleichzeitig eine Rotationsbewegung aus. Bei dem Filtersystem kann dadurch sichergestellt werden, dass Partikel nur in der ersten Translationsbewegungsrichtung von der Filterfläche entfernt werden und somit nicht auf der Filterfläche hin und her geschoben. Mit anderen Worten kann durch den Bewegungsablauf sichergestellt werden, dass Partikel nur in einer Richtung (d.h. in der ersten Translationsbewegungsrichtung) von der Rakel abgeführt werden. Im Folgenden wird ein vorteilhafter Betriebsablauf bei einem Filtersystem mit einer Schraubenrakel dargestellt: vor Beginn des Rakelns kann sich das Filtersystem (insbesondere die Rakel) in einer Ausgangsposition befinden, bei der der Filter (bzw. die Filterfläche) homogen mit Partikeln belegt ist. Dann kann eine Translationsbewegung in der ersten Translationsbewegungsrichtung ausgeführt werden, ohne dass die Rakel rotiert wird. Dabei kann die Rakel die Partikel axial entlang einer Rakelachse verschieben und diese in Schubrichtung vor der Rakel aufhäufen. Dabei entsteht hinter der Rakel ein freigerakelter Bereich. Die Translationsbewegung in der ersten Translationsbewegungsrichtung kann abhängig von der Größe des Filters (beispielsweise der Größe des Filtergehäuses) ausgeführt werden, bis die Rakel an das Ende des Filters gelangt. Anschließend kann die Rakel in der zweiten Translationsbewegungsrichtung (d. h. entgegengesetzt zu der vorausgeführten Bewegungsrichtung) bewegt werden und gleichzeitig um die Rakelachse gedreht werden. Dabei kann die Rakel während der Rotationsbewegung so gedreht werden, dass die Drehung der Rakel im Verhältnis zu der Ganghöhe der Schraubenrakel steht. Somit hat die Translationsbewegung in der zweiten Translationsbewegungsrichtung keinen Einfluss auf die Lage der Partikel auf der Filterfläche und positioniert die Rakel wieder in der Ausgangsposition. Durch ein zyklisches Wiederholen des beschriebenen Bewegungsablaufs können sich die Partikel an einer Seite des Filters ansammeln und sogar durch die Rakel komprimiert werden.

Ferner kann das Filtersystem ein Depot umfassen, wobei die Rakel dazu ausgestaltet ist, die Partikel dem Depot zuzuführen und/oder die Partikel in dem Depot zu komprimieren.

Das Depot kann dabei zumindest teilweise auf der Filterfläche angeordnet sein, so dass Fluid aus den in dem Depot angesammelten Partikel durch den Filter entweichen kann. Insbesondere kann die Rakel dazu ausgestaltet sein, die Partikel in dem Depot zu komprimieren (beispielsweise durch weiteres Nachschieben von weiteren Partikeln). Ferner kann angrenzend an das Depot eine Entnahmevorrichtung und/oder eine Partikelschleuse vorgesehen sein, durch die die Partikel aus dem Depot entnommen werden können. Der obige Bewegungsablauf kann zyklisch wiederholt werden, sodass die Filterfläche auch während einem Betrieb des Filtersystems zuverlässig von Partikeln befreit ist.

Vorzugsweise ist die Rakel und/oder der Rakelantrieb so ausgestaltet, dass während der Translationsbewegung in der zweiten Translationsbewegungsrichtung gleichzeitig die Rotationsbewegung ausgeführt wird.

Dabei kann die Rotationsbewegung rotierend um eine Rakelachse ausgeführt werden. Wie oben beschrieben, kann dadurch erreicht werden, dass die Partikel in der zweiten Translationsbewegungsrichtung nicht verschoben werden. Somit kann die Rakel in die Ausgangsposition verbracht werden, ohne dass Partikel eine lange Strecke über die Filterfläche geschoben werden. Somit kann der Verschleiß des Filters reduziert werden.

Erfindungsgemäß ist die Rakel zumindest abschnittsweise als eine schraubenförmige Rakel, insbesondere als eine Schraubenrakel ausgebildet, und eine Rotationsachse, um die sich die Rakel während der Rotationsbewegung dreht, ist vorzugsweise parallel zu der Filterfläche.

In dieser Ausführungsform hat die Rakel eine ähnliche Ausgestaltung wie eine Schneckenpumpe (wie beispielsweise ein Schneckenförderer, insbesondere eine archimedische Schneckenpumpe), wohingegen keine Volumenpumpen mit Schnecken wie beispielsweise Exzenterschneckenpumpen oder mehrrotorige Schneckenpumpen gemeint sind. Wesentliches Element einer Schneckenpumpe ist, dass bei einer Rotation der Schnecke dem vorwärts zu schiebenden Gut eine axiale Kraftkomponente mitzugeben. Im Fall, dass der Filter ein zylindrischer Filter ist, kann sich die Rotationsachse (d. h. in diesem Fall die Achse der Rakel) entlang der Zentralachse des Filters erstrecken. Dadurch kann erreicht werden, dass während der Rotationsbewegung sich die Rakel relativ zu dem Filter entlang der Filterfläche bewegt.

In einer nicht erfindungsgemäßen Ausführungsform ist die Rakel zumindest abschnittsweise als eine ebene Rakel, insbesondere als eine Planspirale, ausgebildet, und eine Rotationsachse, um die sich die Rakel während der Rotationsbewegung dreht, ist vorzugsweise orthogonal zu der Filterfläche.

In dieser Ausführungsform kann der Filter ein Filter mit einer ebenen Filterfläche sein, auf der sich vorzugsweise eine Planspirale als die Rakel bewegen kann. Dabei kann die Rakel vorzugsweise eine plattenartige Form haben, die zumindest abschnittsweise eine Rakelkante aufweist, die von der Rakel vorsteht, eine Spiralform aufweist und mit der Filterfläche in Kontakt ist. Durch Drehen der Planspirale um eine Rotationsachse (d. h. die Rakelachse) dreht sich die Rakel relativ zu der Filterfläche. Dabei steht die Rotationsachse in diesem Fall orthogonal auf der Filterfläche. Genauso wie bei der obigen Ausführungsform kann in diesem Fall die Rakel translatorisch bewegt werden, um Partikel in einer ersten Translationsbewegungsrichtung von der Filterfläche abzurakeln. Wird die Rakel dann in der entgegengesetzten zweiten Translationsbewegungsrichtung bewegt und gleichzeitig die Rotationsbewegung ausgeführt, indem die Rakel um die Rotationsachse gedreht wird, kann die Rakel wieder an die Ausgangsposition zurückgeführt werden. Bei dieser Ausführungsform kann ein besonderes flaches und bauraumsparendes Filtersystem bereitgestellt werden. Das Grundprinzip bleibt auch bei der vorliegenden Ausführungsform das gleiche, nämlich eine Rakel in zwei Dimensionen zu bewegen.

Vorzugsweise ist ein Verhältnis einer Strecke, um die sich die Rakel einer vollen Rotation während der Rotationsbewegung dreht zu einer Strecke, um die sich die Rakel während der Translationsbewegung relativ zu der Filterfläche bewegt, kleiner 1 oder größer 1.

Mit anderen Worten kann sich die Rotationsbewegung und die Translationsbewegung insofern unterscheiden, als dass die Rakel bei beiden Bewegungen die Rakelkante unterschiedlich weit über die Filterfläche bewegt. Damit kann sichergestellt werden, dass die Rakel nicht immer an derselben Stelle der Filterfläche ihre Bewegungsrichtung und/oder Bewegungsart ändert. Dadurch kann ein hoher lokaler Verschleiß vermieden werden. Dies kann insbesondere vorteilhaft sein, wenn sich abrasive Partikel in dem zu filternden Fluid befinden wie beispielsweise Kalkrückstände. Somit kann ein Durchscheuern der Filterfläche an einer Stelle vermieden werden, was unweigerlich zu einem Totalausfall des Filtersystems führen wird. Somit ist ein zu bevorzugendes Verhältnis aus Verlagerung der Rakel bei der Rotationsbewegung und Verlagerung der Rakel bei der Translationsbewegung nahe bei 1 beispielsweise bei 0,99 oder bei 1,01 sein. Bevorzugt ist das Verhältnis nahe bei 1, z.B. bei 0.99, d.h. statt einer vollen Ganghöhe bzw. Umdrehung kann die Rakel pro Schritt nur 99% oder 101% dieser Bewegung machen, so dass sich dieselben Bewegungsabläufe an den selben Stellen erst alle etwa 100 Schritte wiederholen. Dadurch kann der Verschleiß des Filtersystems möglichst breit auf die gesamte Filterfläche verteilt werden, wodurch die Standseiten des Filtersystems insgesamt erhöht werden kann. Ein solches Verhältnis kann beispielsweise mit einem Übersetzungsgetriebe wie beispielsweise einem Zahnradgetriebe erlangt werden. Beispielsweise kann der Rakelantrieb so ausgestaltet sein, dass kleine ganzzahlige Bruchteile von 1 bzw. um kleine ganzzahlige Bruchteile von 1 vergrößerte Schritte vermieden werden.

Vorzugsweise kann der Rakelantrieb eine Kulisse und zumindest ein unrundes Zahnrad umfassen, sodass die Translationsbewegung und die Rotationsbewegung der Rakel bereitgestellt werden können.

Somit kann ein Rakelantrieb bereitgestellt werden, der eine zweidimensionale Bewegung (d. h. die Rotationsbewegung und die Translationsbewegung) der Rakel realisieren kann. Dabei kann ein Schub der Rakel (d. h. Amplitude, Frequenz und Verlauf) im Wesentlichen durch das antreibende Zahnrad vorgegeben werden, während die Rotation vor allem durch das Zähne-Zahl-Verhältnis der beiden Zahnräder vorgegeben sein kann. Somit kann eine komplexe zweidimensionale Bewegung der Rakel mit mechanisch einfachen Systemen einfach realisiert werden, was zu Kostenersparnissen bei der Herstellung des Filtersystem führt.

Bei der Rakel kann es sich um zumindest abschnittsweise mehrgängige Schrauben handeln. Zu bevorzugen sind Rakeln mit drei Gängen. Die Schraubenrakel kann gewindeartig ausgestaltet sein und eine profilierte Einkerbung an deren zylindrischen Oberfläche umfassen, die fortlaufend wendelartig (d. h. entlang einer Schraubenlinie) in einer zylinderförmigen Innen- oder Außenwand verläuft. Diese fortlaufende Vertiefung kann als Gewindegang bezeichnet werden.

Gemäß einem weiteren Aspekt der vorliegenden Erfindung wird ein Verfahren zum Reinigen einer Filterfläche von ausgefilterten Partikeln mit einer Rakel bereitgestellt, wobei das Verfahren die folgenden Schritte umfasst:
Abrakeln der Filterfläche durch eine Rakel in einer erste Tanslationsbewegungsrichtung relativ zu der Filterfläche,
Bewegen der Rakel in einer der ersten Tanslationsbewegungsrichtung entgegengesetzten zweiten Tanslationsbewegungsrichtung, und
Rotieren der Rakel während sich die Rakel in der zweiten Tanslationsbewegungsrichtung bewegt.

Damit kann sich ein grundsätzlicher Bewegungsablauf mit zwei Basisvektoren der Bewegung bei einem zylindrischen Filter ergeben. Zum einen kann die Rakel in einer Rotationsbewegung drehend (d. h. ohne Schub oder Translation) bewegt werden. Diese Bewegung kann sich im Prinzip endlos fortsetzten, da bei der Drehung eine zyklische Symmetrie des Filtersystems vorliegt. Ferner kann die Rakel in einer Translationsbewegung oder Schubbewegung ohne Drehung bewegt werden. Diese Bewegung ist mechanisch limitiert und muss daher oszillierend ausgeführt werden. Die Limitierung dieser Bewegung ergibt sich aus den Abmessungen des Filters. Die oben beschriebenen Basisvektoren können zu geeigneten Bewegungsabläufen führen, um die Filterfläche eines Filtersystems abzurakeln. So kann beispielsweise durch die Translationsbewegung (Schubbewegung) zunächst die Partikel auf der Filterfläche abgerakelt, d. h. sie sammeln sich in der ersten Translationsbewegungsrichtung vor der Rakelkante an und werden mit der Bewegung der Rakelkante in axialer Richtung der Rakel verschoben, vorzugsweise in Richtung eines Depots. In einem weiteren Bewegungsschritt kann eine der ersten Translationsbewegungsrichtung entgegengesetzten zweite Translationsbewegungsrichtung (d. h. rückwärts schieben und gleichzeitige vorwärtsdrehen im Verhältnis der Ganghöhe der Schraube) ausgeführt werden, um die Schraubenrakel wieder an den ursprünglichen Ort zu bewegen, ohne dass sie eine Kraft auf die Partikel ausübt. Durch im Prinzip endloses Wiederholen dieser Schrittfolge kann zum einen die gesamte Filteroberfläche abgerakelt, zum anderen die Partikel subversiv in Richtung des Depots verschoben werden oder/und dort komprimiert werden.

Vorzugweise rotiert die Rakel während dem Schritt des Abrakelns. Somit kann auch eine gemischte Bewegung bei der Translationsbewegung in der ersten Translationsbewegungsrichtung (d. h. beim Rakeln) erreicht werden, in dem auch ein Drehanteil während dieser Translationsbewegung überlagert wird. Entsprechend kann beim Bewegen der Rakel in der zweiten Translationsbewegungsrichtung der Drehanteil verringert sein. In diesem Fall kann eine besonders einfache Steuerung des Filtersystems erreicht werden.

Die vorliegende Erfindung ermöglicht es eine Filterfläche abzurakeln, die abgerakelten Partikel in Richtung eines Depots zu schieben und/oder sie dort zu komprimieren. Die Partikel können dabei aktiv in das Depot geschoben werden, sodass der filternde Bereich von Partikelansammlungen freigehalten werden kann. Die Erfindung ist besonders dort vorteilhaft, wo zum einen eine hohe Flächengeschwindigkeit beim Rakeln erforderlich ist, wie beispielweise für hohe Filterleistung bei großen Volumendurchsatz mit stark verschmutztem Fluid und kleiner Filterfläche, wie es typisch für Haushaltsgeräte wie Waschmaschinen oder Spülmaschinen mit wenig Bauraum für ein Filtersystem ist. Zum anderen kann der Volumenstrom während des Filterns und Rakeln beibehalten werden, sodass während einem Abpumpen oder Umpumpen von Fluid beispielsweise einer Waschmaschine keine Rücksicht auf den Filterzustand genommen werden muss, was die Steuerung des Haushaltsgeräts vereinfacht. Ferner können sich in dem Depot graumelierter Partikel leichter entnehmen lassen bzw. mit einer Ausschleus-Vorrichtung aus dem Filtersystem ausschleusen, was zu einer vereinfachten Handhabung für einen Nutzer führt.

Trägt man die Translationsbewegung und die Rotationsbewegung in einem Diagramm auf, so müssen die Translationsbewegung und die Rotationsbewegung zusammen keine Sägezahnkurve ergeben. Im Wesentlichen ist es vorteilhaft, wenn eine Oszillation beider Bewegungstypen vorliegt, diese lässt sich in weiten Grenzen variieren, etwa um eine technisch einfache Umsetzung der Bewegung zu ermöglichen. Es lassen sich etwa Dreiecksfunktionen verwenden oder Kurven mit abgerundeten Ecken.

Gemäß einem Aspekt der Erfindung ergibt sich damit ein grundsätzlicher Bewegungsablauf mit zwei Basisvektoren der Bewegung (das Beispiel ist beschrieben für einen zylindrischen Filter, funktioniert aber analog auch für andere Geometrien, etwa einen ebenen Zylinder):
· Drehung (Rotationsbewegung) ohne Schub. Diese Bewegung lässt sich im Prinzip endlos fortsetzen, da bei der Drehung eine zyklische Symmetrie des Filters vorliegt.
· Schub (Translationsbewegung) ohne Drehung. Diese Bewegung ist mechanisch limitiert und muss daher oszillierend ausgeführt werden.

Folgen und Kombinationen dieser Basisvektoren führen zu geeigneten und zu bevorzugenden Bewegungsabläufen, z.B.:
· durch eine Schubbewegung werden zunächst die Partikel auf der Filteroberfläche abgerakelt, d.h. sie sammeln sich in Rakelbewegungsrichtung vor der Rakelkante an und werden mit der Bewegung der Rakelkante in axialer Richtung verschoben, vorzugsweise in Richtung des Depots,
· in einem zweiten Bewegungsschritt wird eine der Schubbewegung entgegengesetzte Schraubbewegung (rückwärts schieben und gleichzeitiges Vorwärtsdrehen im Verhältnis der Ganghöhe der Schraube) ausgeführt, um die Schraubrakel wieder an den ursprünglichen Ort zu bewegen, ohne eine Kraft auf die Partikel auszuüben, und
· durch im Prinzip endloses Wiederholen dieser Schrittfolge wird zum einen die gesamte Filteroberfläche abgerakelt, zum anderen werden die Partikel sukzessive in Richtung des Depots verschoben bzw. dort komprimiert.

Gemäß einem weiteren Aspekt der Erfindung ist es vorteilhaft das obige Filtersystem bei wasserführenden Haushaltsgeräten zu verwenden. Somit kann selbst auf kleinem Bauraum eine ausreichende und effiziente Filterung von Fluid bewerkstelligt werden.

Die Vorteile und Merkmale, die oben im Zusammenhand mit der Vorrichtung erläutert wurden, gelten analog auch für das Verfahren und andersherum. Einzelne Merkmale oder Aspekte der vorliegenden Erfindung können miteinander kombiniert werden und haben die in diesem Zusammenhang erläuterten Vorteile.

Im Folgenden wird die Erfindung anhand von vorteilhaften Ausführungsformen mit Bezug auf die beigefügten Figuren im Detail erläutert. Dabei zeigen:
- **Fig. 1:**: eine schematische Darstellung einer Rakel gemäß einer Ausführungsform der vorliegenden Erfindung,
- **Fig. 2:**: eine schematische Querschnittsansicht eines Filtersystems gemäß einer Ausführungsform der vorliegenden Erfindung,
- **Fig. 3a, 3b und 3c:**: zeigen jeweils verschieden Betriebspositionen einer Rakel in einem Filtersystem gemäß einer Ausführungsform der vorliegenden Erfindung,
- **Fig. 4:**: eine schematische Ansicht eines Filtersystems gemäß einer Ausführungsform der vorliegenden Erfindung,
- **Fig. 5:**: eine Darstellung von Bewegungsabläufen in einem Filtersystem gemäß einer Ausführungsform der vorliegenden Erfindung in einem x-ϕ-Diagramm,
- **Fig. 6:**: eine Darstellung von Bewegungsabläufen in einem Filtersystem gemäß einer Ausführungsform der vorliegenden Erfindung in einem x- ϕ -Diagramm,
- **Fig. 7:**: eine Darstellung von Bewegungsabläufen in einem Filtersystem gemäß einer Ausführungsform der vorliegenden Erfindung in einem x- ϕ -Diagramm, und
- **Fig. 8:**: eine Darstellung von Bewegungsabläufen in einem Filtersystem gemäß einer Ausführungsform der vorliegenden Erfindung in einem x- ϕ -Diagramm.

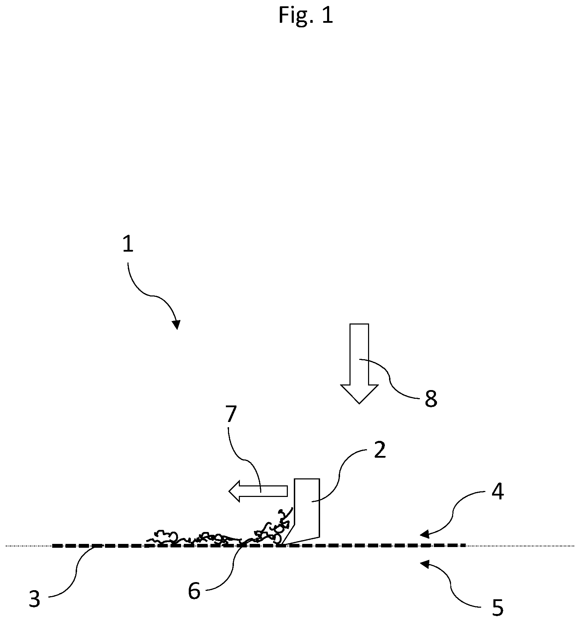

**Fig. 1** ist eine schematische Seitenansicht einer Rakel 2 und einer Filterfläche 3 in einem Filtersystem 1 gemäß einer Ausführungsform der vorliegenden Erfindung. Dabei ist in Fig. 1 insbesondere das Grundprinzip des Rakelns dargestellt. Dabei ist die Rakel 2 als eine klingenartige geformte Rakelkante ausgestaltet und wird gegen die mit Partikeln 6 belegte Filterfläche 3 gedrückt und über diese bewegt. Durch die Form der Rakelkante werden die Partikel 6 von der Filterfläche 3 abgehoben und in Bewegungsrichtung (erste Translationsbewegungsrichtung 7) vor der Rakelkante angehäuft und mit dieser weitergeschoben. Somit kann die Rakel 2 die Filterfläche mechanisch abrakeln. Ferner ist in Fig. 1 ein Fluidzufluss 8 schematisch dargestellt, der anzeigt von welcher Seite der Filterfläche 3 das Fluid dem Filtersystem 1 zugeführt wird. Aus dem Fluid werden Partikel 6 von der Filterfläche 3 an dem Primärbereich 4 zurückgehalten. Anschließend durchströmt das Fluid die Filterfläche 3 (d.h. den Filter) und tritt an dem Sekundärbereich 5 der Filterfläche 3 aus dem Filter aus und kann im weiteren Verlauf das Filtersystem 1 wieder verlassen. Somit werden die Partikel 6 in dem Filtersystem 1 zurückgehalten.

Der Filter bzw. die Filterfläche 3 sind aus einer Gazemembran oder einem Metallsieb gebildet und könne daher keine gerichtete Kraft auf die Partikel 6 ausüben. Somit können die Partikel 6 auf der Filterfläche 3 bei einer translatorischen Verschiebung der Partikel eine der translatorischen Verschiebungsrichtung entgegengesetzte Kraftkomponente entgegensetzen. Dies liegt vor allem am Zusammenspiel von Haft- und Gleitreibung der Partikel 6 an der Rakel 2 bzw. der Filterfläche 3 bei der Bewegung der Rakel 2. Damit werden die Partikel 6 im Wesentlichen der Bewegung der anschiebenden Kante der Rakel 2 folgen. Somit werden die Partikel 6, wenn sich die Rakel 2 um eine Zylinderachse dreht, vor allem im Kreis geschoben, wohingegen die Partikel vor allem in Achsrichtung verschoben werden, wenn sich die Rakel in Achsrichtung bewegt.

Aus dieser Erkenntnis ist zu schlussfolgern, dass beispielsweise bei einer schraubenförmigen Rakel, die sich drehend bewegt und mit der Filterfläche in Kontakt ist, Partikel auf einer Kreisbahn über die Filterfläche geschoben werden. Dadurch ist die Strecke, über die die Partikel über die Filterfläche geschoben werden, verlängert, was zu einem erhöhten Verschleiß der Filterfläche bzw. des Filters führen kann.

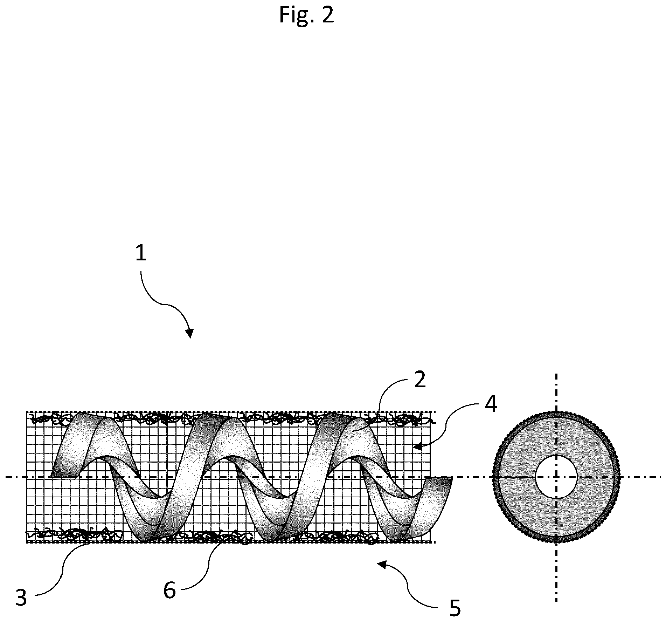

Die vorliegende Erfindung adressiert unter anderem dieses Problem, indem ein grundsätzlicher Bewegungsablauf der Rakel 2 mit zwei Basisvektoren bereitgestellt wird. Dazu ist in **Fig. 2** schematisch eine Schraubenrakel 2 in einem zylindrischen Filter dargestellt. Auf der linken Seite ist ein schematischer Längsschnitt durch den Filter dargestellt und auf der rechten Seite der Fig. 2 ist eine Draufsicht auf den Filter dargestellt. Die Mantelfläche des zylindrischen Filters bildet die Filterfläche 3. Ferner weist die Rakel 2 bei dem in Fig. 2 dargestellten Beispiel eine zur Translationsbewegungsrichtung schräg angestellte Rakelkante auf. Bei einer axialen Verschiebung der Rakel 2 (d. h. in der Bildebene der Fig. 2 nach links oder rechts) werden in Bewegungsrichtung vor der Rakel Partikel 6 aufgehäuft. Mit anderen Worten werden Partikel 6 in Bewegungsrichtung der Rakel 2 mitgeschoben. Für ein seitliches Ablenken der Partikel 6 (in Fig. 2 in Richtung nach oben) fehlt eine seitliche Kraftkomponente.

Die Ausführungsform in Fig. 2 ist lediglich eine von mehreren möglichen Ausführungsformen. Es ist bei, nicht unter die vorliegenden Ansprüche fallenden, Filtersystem-en denkbar, die Filterfläche 3 als eine ebene Filterfläche auszugestalten (d. h. als eine Abwicklung der zylindrischen Filterfläche in Fig. 2) und als Rakel 2 als Spirale einzusetzen. In jedem Fall ergibt sich ein grundsätzlicher Bewegungsablauf mit zwei Basisvektoren der Bewegung:
· Einer Rotationsbewegung ohne translatorische Bewegung, die sich im Prinzip endlos fortsetzen lässt, da bei der Rotationsbewegung eine zyprische Symmetrie des Filters vorliegt.
· Zudem ergibt sich eine Translationsbewegung ohne Rotationsbewegung, die mechanisch limitiert ist und daher oszillierend ausgeführt werden muss.

Die mechanische Limitation der Translationsbewegung resultiert aus den begrenzten Platzverhältnissen innerhalb des Filtersystems 1, weswegen die Rakel 2 nicht endlos in eine Richtung verschoben werden kann. Eine Kombination dieser Basisvektoren führt zu den erfindungsgemäßen Bewegungsabläufen. Durch die Translationsbewegung (d. h. eine Schubbewegung) werden zunächst die Partikel 6 auf der Filterfläche 3 abgerakelt, sodass sie sich in einer ersten Translationsbewegungsrichtung 7 vor der Rakelkante ansammeln und mit der Bewegung der Rakel 2 in der ersten Translationsbewegungsrichtung 7 (d. h. in axialer Richtung der Schraubenrakel) verschoben werden. Dabei können die Partikel 6 beispielsweise in ein Depot, das in dem Filtersystem 1 angeordnet ist, verschoben werden. Anschließend kann die Rakel 2 translatorisch in einer der ersten Translationsbewegungsrichtung 7 entgegengesetzten zweiten Translationsbewegungsrichtung 9 bewegt werden und gleichzeitig rotiert werden. Mit anderen Worten wird die Rakel 2 rückwärts verschoben und gleichzeitig vorwärts gedreht. Die Translationsbewegung der zweiten Translationsbewegungsrichtung 9 ist dabei in einem Verhältnis der Ganghöhe der Schraubenrakel 2. So kann die Rakel 2 wieder an den ursprünglichen Ort (d.h. in die Ausgangsposition) bewegt werden, ohne dass eine Kraft auf die Partikel 6 ausgeübt wird. Mit anderen Worten werden bei der Bewegung der Rakel 2 in der zweiten Translationsbewegungsrichtung 9 keine Partikel 6 von der Filterfläche 3 abgehoben. Diese Bewegungsabfolge kann im Prinzip endlos wiederholt werden, um die gesamte Filterfläche 3 abzurakeln. Ferner kann durch ein Wiederholen dieser Schrittfolge Partikel 6 sukzessive in Richtung eines Depots in dem Filter verschoben werden und/oder dort komprimiert werden.

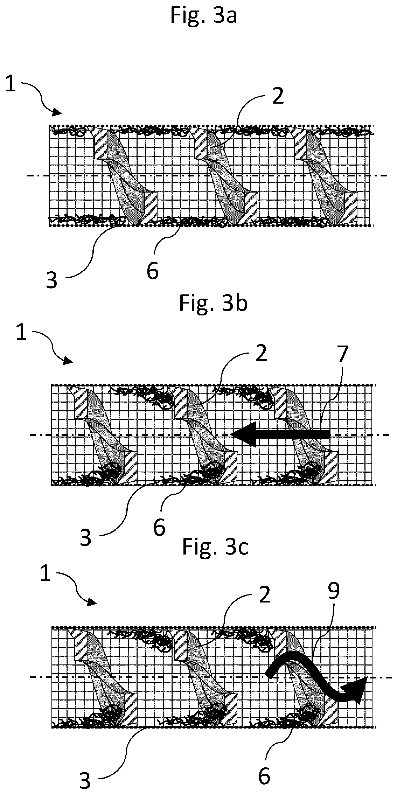

Zur Veranschaulichung wird die Schrittfolge im Folgenden anhand der **Figuren 3a bis 3c** beschrieben. In den Figuren 3a bis 3c ist dasselbe Filtersystem 1 wie in Fig. 2 dargestellt.

In **Fig. 3a** befindet sich die Rakel 2 in ihrer Ausgangsposition. Die Filterfläche 3 ist in diesem Fall homogen mit Partikel 6 belegt.

In **Fig. 3b** beginnt die Translationsbewegung der Rakel 2 in der ersten Translationsbewegungsrichtung 7, sodass die Rakel 2 die Partikel 6 in der ersten Translationsbewegungsrichtung 7 (axiale Richtung der Rakel 2) verschiebt und die Partikel 6 in der ersten Translationsbewegungsrichtung 7 vor der Rakel 2 aufhäuft. Durch diese Bewegung entsteht hinter der Rakel 2 ein freigerakelter Bereich, der für eine weitere Filterung von Fluid zur Verfügung steht. Der Pfeil in Fig. 3b verdeutlicht die Bewegung der Rakel 2 in der ersten Translationsbewegungsrichtung 7.

In **Fig. 3c** ist dargestellt, wie die Rakel 2 in der zweiten Translationsbewegungsrichtung 9 und einer gleichzeitigen Rotationsbewegung im Verhältnis der Ganghöhe der Rakel 2 nach hinten verschoben wird, um die Rakel wieder in die in Fig. 3a dargestellte Ausgangsposition zu bringen. Die Rotationsbewegung der Rakel 2 ist dabei im Verhältnis zu der Ganghöhe der Schraubenrakel 2, sodass durch die in Fig. 3c dargestellte Bewegung (die Translationsbewegung und die Rotationsbewegung) keine Wirkung auf die Partikel 6 hat.

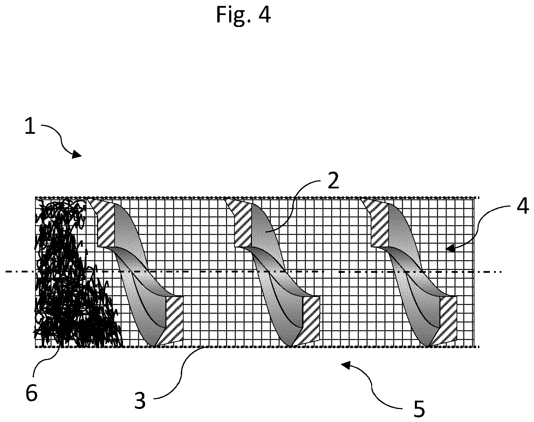

**Fig. 4** eine schematische Ansicht des Filtersystems 1 aus Fig. 2 und 3 nach einem zyklischen Wiederholen der in Fig. 3a bis 3c dargestellten Bewegungsabläufe. Dadurch können die Partikel 6 einen Bereich (z.B. einem Depot) in dem Filtersystem 1 zugeführt werden und durch nachgeführte Partikel 6 komprimiert werden. In einem Bereich, in dem die Partikel 6 in dem Filtersystem 1 angesammelt werden, kann eine Entnahmevorrichtung und/oder eine Partikelschleuse (nicht dargestellt) vorgesehen sein, um die Partikel 6 aus dem Filtersystem 1 zu entnehmen.

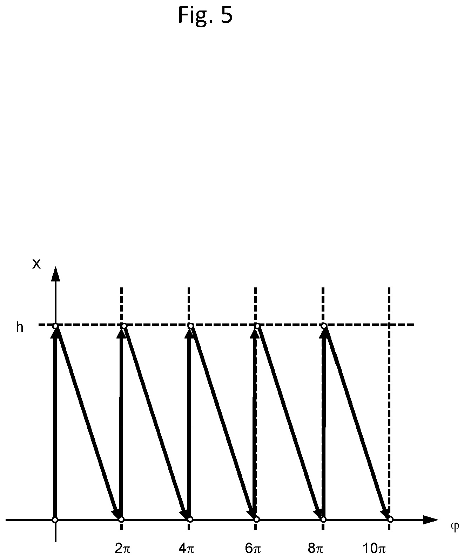

**Fig. 5** ist ein x-ϕ Diagramm, das die grundlegenden Bewegungsabläufe der Rakel 2 in dem Filtersystem 1 darstellt. Auf der x-Achse ist dabei die Bewegung in der ersten und zweiten Translationsbewegungsrichtung 9 dargestellt. Auf der ϕ-Achse ist die Drehung der Rakel 2 um deren Rotationsachse dargestellt. Die in Fig. 3b dargestellte Translationsbewegung entspricht dem Bewegungspfeil in Fig. 5, der von dem Ursprung des Diagramms bis zu dem Punkt h auf der x-Achse reicht. Der daran anschließende Bewegungspfeil, der diagonal zu dem Punkt 2 π auf der ϕ-Achse verläuft, entspricht der in Fig. 3c dargestellten zweiten Translationsbewegung 9 zusammen mit der Rotationsbewegung. Mit anderen Worten wird die Rakel 2 mit einer Schraubenbewegung um die Rakelachse, d. h. eine Drehung, so mit einem Schub entlang der Rakelachse Schub kombiniert, dass sich eine kombinierte Bewegung ergibt. Dabei ergibt sich keine Relativbewegung zwischen der Rakel 2 und der Filterfläche 3 orthogonal zu der Rakelkante. Da das System in ϕ-Richtung eine zyklische Symmetrie aufweist, lassen sich die einzelnen Schritte beliebig oft hintereinander ausführen, d. h. die Drehbewegung kann endlos fortgesetzt werden. In x-Richtung ist eine Bewegung mechanisch limitiert, daher muss die Bewegung dort oszillierend sein.

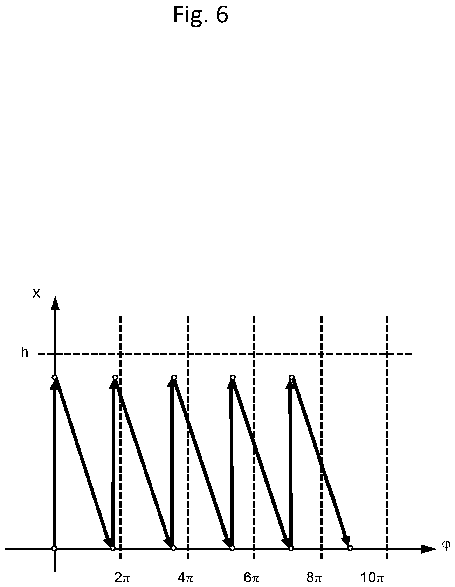

In **Fig. 6** ist dasselbe Diagramm wie in Fig. 5 dargestellt, wobei bei dieser Ausführungsform die Translationsbewegung in der ersten Translationsbewegungsrichtung 7 geringer ist als bei der vorherigen Ausführungsform. Mit anderen Worten kann eine Bewegung der Rakel 2 in der ersten Translationsbewegungsrichtung 7 weniger als einer vollen Ganghöhe der Schraubenrakel 2 entsprechen. Genauso wird auch bei der darauffolgende kombinierten Translationsbewegung in der zweiten Translationsbewegungsrichtung 9 und der Rotationsbewegung die Rakel weniger als eine vollständige Umdrehung gedreht. Daher wird für die beiden Basisvektoren nicht die komplette Umdrehung bzw. eine vollständige Ganghöhe der Rakel 2 benutzt, sondern beispielsweise ein Anteil der geringer ist wie beispielsweise 99 %. Dadurch wiederholt sich dieselbe Bewegung auf derselben Stelle erst nach ca. 100 Zyklen, wodurch der Verschleiß der Filterfläche 3 breit verteilt wird (d. h. auf der gesamten Filterfläche 3) und somit die Gefahr punktueller Filterflächenschäden verringert ist.

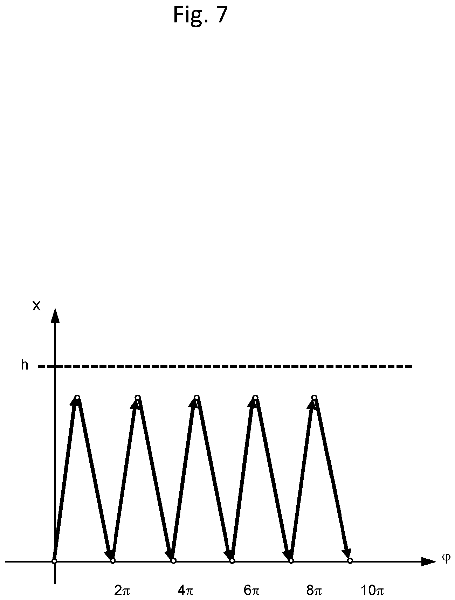

In **Fig. 7** ist eine weitere Ausführungsform der vorliegenden Erfindung gestellt. Dazu ist in Fig. 7 ein Diagramm, wie in den zuvor beschriebenen Figuren dargestellt. Bei der vorliegenden Ausführungsform kann die Rakel 2 eine gemischte Bewegung ausführen, sodass bei der Translationsbewegung in der ersten Translationsbewegungsrichtung 7 bereits eine Rotationsbewegung ausgeführt wird. Dementsprechend wird die Rotationsbewegung bei der Translationsbewegung in der zweiten Translationsbewegungsrichtung 9 entsprechend verringert. Mit anderen Worten kann bei einem Schieben der Rakel 2 (d. h. beim Abrakeln der Partikel 6 von der Filterfläche 3) auch ein Drehanteil überlagert werden, wobei entsprechend bei dem Zurückschrauben der Rakel 2 der Drehanteil verringert ist.

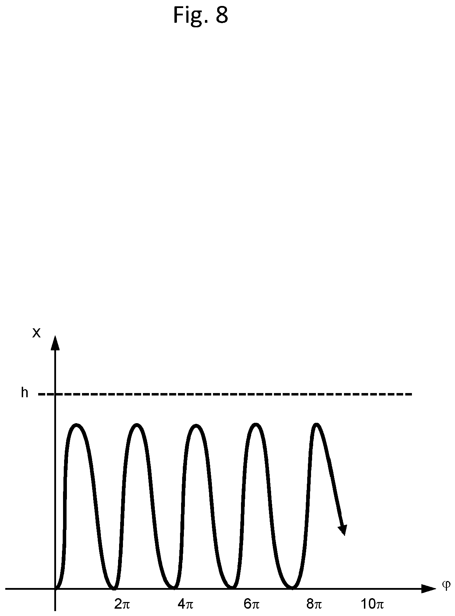

In **Fig. 8** eine weitere Ausführungsform der vorliegenden Erfindung dargestellt. Dabei entspricht das Diagramm der Fig. 8 den zuvor beschriebenen Diagrammen. Bei der vorliegenden Ausführungsform wird durch Kombinieren der Translationsbewegung und der Rotationsbewegung eine geschwungene Bewegungsbahn realisiert, wodurch insbesondere beim Anfahren und beim Verzögern der Rakel 2 die Filterfläche 3 geschont werden kann. Gleichzeitig bietet sich aber auch die Möglichkeit die Filterfläche 3 zuverlässig von Partikel 6 zu Reinigen.

Es ist praktisch eine beliebige periodische Funktion zur Erfüllung der Aufgabe der vorliegenden Erfindung denkbar, sodass das Zusammenspiel einer Translationsbewegung und einer Rotationsbewegung einer Rakel 2 auf beliebige Filtersystem angepasst werden kann.

### Bezugszeichenliste

- 1: Filtersystem
- 2: Rakel
- 3: Filterfläche
- 4: primäre Bereich
- 5: sekundärer Bereich
- 6: Partikel
- 7: erste Translationsbewegungsrichtung
- 8: Fluidzufluss
- 9: zweite Translationsbewegungsrichtung

## Patentansprüche

1. Filtersystem (1) für ein wasserführendes Haushaltsgerät umfassend:
einen Filter mit einer Filterfläche (3) zum Ausfiltern von Partikeln (6) aus einem Fluid,
eine Rakel (2), die dazu ausgestaltet ist, die Filterfläche (3) abzurakeln, und
einen Rakelantrieb, der dazu ausgestaltet ist, die Rakel so anzutreiben, dass sich die Rakel (2) mit einer Translationsbewegung und einer Rotationsbewegung relativ zu der Filterfläche (3) bewegt,
wobei die Rakel (2) zumindest abschnittsweise als eine Schraubenrakel mit einem oder mehreren Schraubengängen ausgestaltet ist.

2. Filtersystem (1) gemäß Anspruch 1, wobei die Translationsbewegung eine Bewegung in eine erste Translationsbewegungsrichtung (7) und in eine zweite entgegengesetzte Translationsbewegungsrichtung (9) umfasst.

3. Filtersystem (1) gemäß Anspruch 2, wobei die Rakel (2) und/oder der Rakelantrieb so ausgestaltet ist oder sind, dass nur während der Translationsbewegung in die erste Translationsbewegungsrichtung (7) Partikel (6) von der Filterfläche (3) abgerakelt werden.

4. Filtersystem (1) gemäß Anspruch 2 oder 3, wobei die Rakel (2) und/oder der Rakelantrieb so ausgestaltet ist oder sind, dass während der Translationsbewegung in der zweiten Translationsbewegungsrichtung (9) gleichzeitig die Rotationsbewegung ausgeführt wird.

5. Filtersystem (1) gemäß einem der vorhergehenden Ansprüche, wobei eine Rotationsachse, um die sich die Rakel (2) während der Rotationsbewegung dreht, parallel zu der Filterfläche (3) ist.

6. Filtersystem (1) gemäß einem der vorhergehenden Ansprüchen, wobei ein Verhältnis einer Strecke, um die sich die Rakel (1) bei einer vollen Rotation während der Rotationsbewegung dreht, zu einer Strecke um die sich die Rakel während der Translationsbewegung relativ zu der Filterfläche (3) bewegt, kleiner 1 oder größer 1 ist.

7. Filtersystem (1) gemäß einem der vorhergehenden Ansprüchen, wobei der Rakelantrieb eine Kulisse und zumindest ein unrundes Zahnrad umfasst, so dass die Translationsbewegung und die Rotationsbewegung der Rakel (2) bereitgestellt werden können.

8. Verfahren zum Reinigen einer Filterfläche (3) von ausgefilterten Partikel (6) mit einer Rakel (2), wobei das Verfahren die folgenden Schritte umfasst:
Abrakeln der Filterfläche (3) durch eine Rakel (2) in einer ersten Translationsbewegungsrichtung (7) relativ zu der Filterfläche (3),
Bewegen der Rakel (2) in einer, der ersten Translationsbewegungsrichtung (7) entgegengesetzten, zweiten Translationsbewegungsrichtung (9), und
Rotieren der Rakel (2) während sich die Rakel in der zweiten Translationsbewegungsrichtung (9) bewegt.,
wobei die Rakel (2) wenigstens abschnittsweise als eine Schraubenrakel mit einem oder mehreren Schraubengängen ausgestaltet ist.

9. Verfahren gemäß Anspruch 8, wobei die Rakel (2) auch während des Schrittes des Abrakelns rotiert wird.

## Claims

1. Filter system (1) for a water-conducting household appliance comprising:
a filter with a filter surface (3) for filtering out particles (6) from a fluid,
a scraper (2) which is designed to scrape the filter surface (3), and
a scraper drive, which is designed to drive the scraper so that the scraper (2) moves with a translatory movement and a rotational movement relative to the filter surface (3),
wherein the scraper (2) is designed at least in sections as a helical scraper with one or more screw threads.

2. Filter system (1) according to claim 1, wherein the translatory movement comprises a movement in a first translatory movement direction (7) and in a second opposite translatory movement direction (9).

3. Filter system (1) according to claim 2, wherein the scraper (2) and/or the scraper drive is or are embodied so that particles (6) are scraped from the filter surface (3) only during the translatory movement in the first translatory movement direction (7).

4. Filter system (1) according to claim 2 or 3, wherein the scraper (2) and/or the scraper drive is or are embodied so that the rotational movement is executed at the same time as the translatory movement in the second translatory movement direction (9).

5. Filter system (1) according to one of the preceding claims, wherein an axis of rotation, about which the scraper (2) rotates during the rotational movement, is parallel to the filter surface (3).

6. Filter system (1) according to one of the preceding claims, wherein a ratio of a path about which the scraper (1) rotates with a full rotation during the rotational movement to a path about which the scraper moves during the translatory movement relative to the filter surface (3) is less than 1 or greater than 1.

7. Filter system (1) according to one of the preceding claims, wherein the scraper drive comprises a connecting piece and at least one non-round toothed wheel, so that the translatory movement and the rotational movement of the scraper (2) can be provided.

8. Method for cleaning a filter surface (3) of filtered out particles (6) with a scraper (2), wherein the method comprises the following steps:
scraping the filter surface (3) by means of a scraper (2) in a first translatory movement direction (7) relative to the filter surface (3),
moving the scraper (2) in a second translatory movement direction (9) which is opposite to the first translatory movement direction (7), and
rotating the scraper (2) while the scraper is moving in the second translatory movement direction (9),
wherein the scraper (2) is designed at least in sections as a helical scraper with one or more screw threads.

9. Method according to claim 8, wherein the scraper (2) is also rotated during the step of scraping.

## Revendications

1. Système de filtre (1) pour un appareil ménager à circulation d'eau comprenant :
un filtre avec une surface de filtre (3) pour filtrer des particules (6) d'un fluide,
un racloir (2) conçu pour racler la surface de filtre (3), et
un entraînement de racloir conçu pour entraîner le racloir de sorte que le racloir (2) se déplace selon un mouvement de translation et un mouvement de rotation par rapport à la surface de filtre (3),
dans lequel le racloir (2) est conçu, au moins par sections, sous la forme d'un racloir à vis avec un ou plusieurs pas de vis.

2. Système de filtre (1) selon la revendication 1, dans lequel le mouvement de translation comprend un mouvement dans une première direction de mouvement de translation (7) et dans une deuxième direction de mouvement de translation opposée (9).

3. Système de filtre (1) selon la revendication 2, dans lequel le racloir (2) et/ou l'entraînement de racloir est ou sont conçu(s) de sorte que les particules (6) sont uniquement raclées de la surface de filtre (3) durant le mouvement de translation dans la première direction de mouvement de translation (7).

4. Système de filtre (1) selon la revendication 2 ou 3, dans lequel le racloir (2) et/ou l'entraînement de racloir est ou sont conçu(s) de sorte que durant le mouvement de translation dans la deuxième direction de mouvement de translation (9), le mouvement de rotation est exécuté simultanément.

5. Système de filtre (1) selon l'une des revendications précédentes, dans lequel un axe de rotation autour duquel le racloir (2) tourne durant le mouvement de rotation est parallèle à la surface de filtre (3).

6. Système de filtre (1) selon l'une des revendications précédentes, dans lequel un rapport entre une distance dont le racloir (1) tourne lors d'une rotation complète durant le mouvement de rotation et une distance dont le racloir se déplace par rapport à la surface de filtre (3) durant le mouvement de translation est inférieur à 1 ou supérieur à 1.

7. Système de filtre (1) selon l'une des revendications précédentes, dans lequel l'entraînement de racloir comprend une coulisse et au moins une roue dentée ovale, de sorte que le mouvement de translation et le mouvement de rotation du racloir (2) peuvent être mis à disposition.

8. Procédé de nettoyage avec un racloir (2) de particules filtrées (6) sur une surface de filtre (3), dans lequel le procédé comprend les étapes suivantes :
raclage de la surface de filtre (3) par un racloir (2) dans une première direction de mouvement de translation (7) par rapport à la surface de filtre (3),
déplacement du racloir (2) dans une deuxième direction de mouvement de translation (9) opposée à la première direction de mouvement de translation (7), et
rotation du racloir (2) pendant que le racloir se déplace dans la deuxième direction de mouvement de translation (9),
dans lequel le racloir (2) est conçu au moins par sections sous la forme d'un racloir à vis avec un ou plusieurs pas de vis.

9. Procédé selon la revendication 8, dans lequel le racloir (2) est également mis en rotation durant l'étape de raclage.
